# EUROPÄISCHE PATENTSCHRIFT

(11) **EP 3 722 121 B1**
(45) Veröffentlichungstag und Bekanntmachung des Hinweises auf die Patenterteilung: **24.11.2021**
(21) Anmeldenummer: 19168696.3
(22) Anmeldetag: 11.04.2019
(51) Int. Cl.: B60G 7/00

(54) **EINSCHALIGER FEDERLENKER**
ONE-SHELL SUSPENSION ARM
BRAS DE SUSPENSION MONOCOQUE À RESSORT

(43) Veröffentlichungstag der Anmeldung: 14.10.2020
(73) Patentinhaber: Autotech Engineering Deutschland GmbH, 33647 Bielefeld (DE); Autotech Engineering S.L., 48340 Amorebieta-Etxano (ES); Gestamp Umformtechnik GmbH, 33647 Bielefeld (DE)
(72) Erfinder: Frenzel, Oliver, 48336 Sassenberg (DE); Niemann, Julian, 33719 Bielefeld (DE)
(74) Vertreter: Cohausz & Florack

(56) Entgegenhaltungen:
- EP-A1- 1 642 754
- DE-A1-102011 000 462
- GB-A- 2 198 398

## Beschreibung

Die Erfindung betrifft einen aus Metallblech geformten einschaligen Federlenker für eine Radaufhängung eines Kraftfahrzeuges, mit nach oben gerichteten, durch einen Boden miteinander verbundenen Seitenschenkeln, mit einem ersten Endabschnitt zur Anbindung an einem Fahrwerksträger, mit einem zweiten Endabschnitt zur radseitigen Anbindung, mit einem Federaufnahmeabschnitt, der sich zwischen den beiden Endabschnitten befindet und eine auf dem Boden ausgebildete Federabstützfläche aufweist, und mit einem zwischen dem Federaufnahmeabschnitt und dem zweiten Endabschnitt ausgebildeten Dämpferaufnahmeabschnitt zur Anbindung eines Stoßdämpfers.

Federlenker dienen der Führung eines Fahrwerkrades an einer Radaufhängung eines Kraftfahrzeuges. Sie weisen einen Abschnitt zur Abstützung einer Feder und einen Abschnitt zur Anbindung eines Stoßdämpfers oder alternativ einen Abschnitt zur Abstützung einer Feder-Stoßdämpfer-Anordnung auf, wobei die Feder bzw. Feder-Stoßdämpfer-Anordnung ihrerseits gegen die Karosserie abgestützt ist.

Ein Federlenker der oben genannten Art ist aus der DE 10 2011 000 462 A1 bekannt. Der Federlenker, der in der Firmengruppe der Anmelderin für Kraftfahrzeuge mit Verbrennungsmotor und einer bestimmten maximalen Achslast entwickelt wurde, hat sich in der Praxis gut bewährt. Jedoch hat sich gezeigt, dass der Federlenker beim Einsatz in ähnlichen Kraftfahrzeugen mit Elektroantrieb, bei denen aufgrund des hohen Gewichts des Antriebsakkumulators eine deutlich höhere Achslast auftritt, an der Dämpferanbindung zwischen der radseitigen Anbindung und der Federabstützfläche nicht ausreichend steif ist und mitunter versagt. Der wesentliche Grund für das Bauteilversagen wird in einer zu großen Aufweitung oder Verformung der Seitenschenkel in x-Richtung (d. h. in der horizontalen Fahrzeuglängsrichtung) aufgrund einer zu hohen Achslast in z-Richtung (d. h. entlang der vertikalen Fahrzeughochachse) gesehen.

Eine bekannte Maßnahme zur Verbesserung der Steifigkeit, insbesondere der Biegesteifigkeit eines Federlenkers, der hohen Achslasten ausgesetzt ist, besteht in der Verwendung von Stahlblech höherer Materialstärke bei der Herstellung des Federlenkers. Eine Erhöhung der Materialstärke führt dabei jedoch zu einer erheblichen Gewichtszunahme pro Federlenker und höheren Materialkosten.

Eine weitere bekannte Maßnahme zur Erzielung einer hohen Belastbarkeit des Federlenkers im Bereich der Federauflage ist das Anbringen von einem oder mehreren verstärkenden Zusatzblechen, insbesondere Brückenblechen (siehe z. B. DE 10 2004 008 957 A1 und DE 10 2014 118 518 A1). Die Herstellung solcher Zusatzbleche erfordert jedoch entsprechende Fertigungsschritte, was hinsichtlich der Herstellungskosten ungünstig ist. Zudem haben bekannte mehrteilige Federlenker aufgrund ihrer verstärkenden Zusatzbleche mitunter ein relativ hohes Bauteilgewicht.

Die EP 1 642 754 A1, die den Oberbegriff des Anspruchs 1 zeigt, offenbart einen Federlenker für eine Radaufhängung eines Kraftfahrzeuges, der aus einem extrudierten Profil aus einer Aluminiumlegierung gefertigt ist.

Die GB 2 198 398 A offenbart ein Radaufhängesystem für Fahrzeuge, umfassend einen Zughebel, zwei Querlenker und einen Federlenker mit nach oben gerichteten, durch einen Boden miteinander verbundenen Seitenschenkeln, mit einem ersten Endabschnitt zur Anbindung an einem Fahrwerksträger, mit einem zweiten Endabschnitt zur radseitigen Anbindung, mit einem Federaufnahmeabschnitt, der sich zwischen den beiden Endabschnitten befindet und eine auf dem Boden ausgebildete Federabstützfläche aufweist, und mit einem zwischen dem Federaufnahmeabschnitt und dem zweiten Endabschnitt ausgebildeten Dämpferaufnahmeabschnitt zur Anbindung eines Stoßdämpfers.

Davon ausgehend liegt der Erfindung die Aufgabe zugrunde, einen Federlenker der eingangs genannten Art zu schaffen, der bei relativ geringem Bauteilgewicht sowie günstigen Herstellungskosten eine verbesserte Steifigkeit hinsichtlich hoher Achslasten aufweist.

Zur Lösung dieser Aufgabe wird ein Federlenker mit den in Anspruch 1 angegebenen Merkmalen vorgeschlagen. Vorteilhafte Ausgestaltungen des erfindungsgemäßen Federlenkers sind in den auf Anspruch 1 rückbezogenen Unteransprüchen angegeben. Der erfindungsgemäße einschalige Federlenker ist dadurch gekennzeichnet, dass zwischen der Federabstützfläche und dem Dämpferaufnahmeabschnitt eine U-förmige Einschnürung in Form einer U-förmige Sicke ausgebildet ist, die in dem Boden und in den Seitenschenkeln des Federlenkers verläuft.

Durch die U-förmige Einschnürung (Sicke) lässt sich ein gattungsgemäßer Federlenker mit deutlich verbesserter Steifigkeit hinsichtlich hoher Achslasten erzielen. Da hierzu weder die Materialstärke des für die Herstellung des Federlenkers verwendeten Metallblechs erhöht werden muss noch Brückenbleche oder sonstige verstärkende Zusatzbleche an den Federlenker angefügt werden müssen, lässt sich der Federlenker mit relativ geringem Bauteilgewicht sowie günstigen Herstellungskosten bereitstellen.

In einer bevorzugten Ausgestaltung des erfindungsgemäßen Federlenkers ist die Einschnürung durch eine Hauptebene, eine zweite Ebene und eine dritte Ebene definiert, wobei die Hauptebene tangential zu der der Federabstützfläche gegenüberliegende Unterseite des Bodens verläuft, wobei die zweite Ebene oberhalb und parallel zu der Hauptebene und durch den Hochpunkt der Einschnürung in der Unterseite des Bodens verläuft, wobei die dritte Ebene parallel zu der Hauptebene und durch einen Schnittpunkt verläuft, wobei der Schnittpunkt ein Schnittpunkt einer Geraden mit einer unteren Außenkonturlinie eines der Seitenschenkel ist, wobei die Gerade senkrecht zu der Hauptebene und durch einen Mittelpunkt eines im Dämpferaufnahmeabschnitt ausgebildeten, der Anbindung dies Stoßdämpfers dienenden Befestigungsloches verläuft, und wobei die zweite Ebene relativ zu der Hauptebene und die dritte Ebene relativ zu der zweiten Ebene beabstandet sind.

Die dritte Ebene kann auch als Dämpferebene oder Dämpferreferenzebene bezeichnet werden. Die dritte Ebene (Dämpferebene) kann in, unterhalb oder oberhalb der Hauptebene verlaufen. Vorzugsweise ist der Abstand der dritten Ebene zu der zweiten Ebene größer als der Abstand der zweiten Ebene zu der Hauptebene.

Soweit in der vorliegenden Beschreibung des erfindungsgemäßen Federlenkers die Begriffe "oben", "oberhalb", "unterhalb", "Unterseite" und/oder "Hochpunkt" verwendet werden, beziehen sich diese Begriffe auf die übliche Einbaulage des Federlenkers. Insbesondere ist mit dem Ausdruck "Hochpunkt der Einschnürung in der Unterseite des Bodens" die Stelle der Einschnürung in der Unterseite des Bodens des Federlenkers gemeint, wo die Einschnürung in der üblichen Einbaulage des Federlenkers ihre größte Profiltiefe in der Unterseite des Bodens des Federlenkers aufweist.

Eine weitere Ausgestaltung des erfindungsgemäßen Federlenkers, dessen jeweiliger Seitenschenkel eine Oberkante definiert, ist dadurch gekennzeichnet, dass der Abstand der Oberkante relativ zu dem Boden an der Einschnürung ein Minimum hat. Diese Ausgestaltung hat sich als sehr vorteilhaft erwiesen, um einen erfindungsgemäßen Federlenker zu erzielen, der bei relativ geringem Bauteilgewicht sowie günstigen Herstellungskosten eine verbesserte Steifigkeit hinsichtlich hoher Achslasten aufweist.

Eine weitere vorteilhafte Ausgestaltung des Federlenkers, dessen Seitenschenkel einander zugewandte Flanken definieren, ist dadurch gekennzeichnet, dass der Abstand der Flanken zueinander an der Einschnürung kleiner ist als der Abstand der Flanken zueinander am Dämpferaufnahmeabschnitt. Auch diese Ausgestaltung trägt zu einer verbesserten Steifigkeit hinsichtlich hoher Achslasten bei, insbesondere dann, wenn der Abstand der Flanken zueinander an der Einschnürung um mindestens 3 mm, vorzugsweise um mindestens 5 mm kleiner ist als der Abstand der Flanken zueinander am Dämpferaufnahmeabschnitt.

Des Weiteren hat es sich als günstig für eine hohe Steifigkeit des Federlenkers bei konstantem oder geringem Bauteilgewicht herausgestellt, wenn nach einer weiteren Ausgestaltung des Federlenkers der Abstand seiner Flanken zueinander an der Einschnürung größer ist als der Abstand der Flanken zueinander am zweiten Endabschnitt des Federlenkers. Diesbezüglich wird insbesondere vorgeschlagen, dass der Abstand der Flanken zueinander an der Einschnürung um mindestens 5 mm, vorzugsweise um mindestens 8 mm größer ist als der Abstand der Flanken zueinander am zweiten Endabschnitt.

Nach einer alternativen Ausgestaltung des Federlenkers kann der Abstand seiner Flanken zueinander an der Einschnürung auch kleiner als oder gleich dem Abstand der Flanken zueinander am zweiten Endabschnitt des Federlenkers sein. Beispielsweise kann der Abstand der Flanken zueinander an der Einschnürung um mindestens 3 mm, vorzugsweise um mindestens 5 mm kleiner sein als der Abstand der Flanken zueinander am zweiten Endabschnitt.

Um eine kritische Aufweitung oder Verformung der Seitenschenkel des Federlenkers infolge hoher Achslasten in z-Richtung (Fahrzeughochachse) weitestgehend zu verhindern, ohne dabei das Bauteilgewicht des Federlenkers zu erhöhen, sieht eine weitere Ausgestaltung der Erfindung vor, dass eine Tiefe (Profiltiefe) der Einschnürung relativ zu der oben genannten Hauptebene im Bereich von 1,5 mm bis 40 mm, vorzugsweise im Bereich von 5 mm bis 40 mm, besonders bevorzugt im Bereich von 10 mm bis 40 mm liegt.

Eine weitere Ausgestaltung der Erfindung sieht vor, dass eine Tiefe (Profiltiefe) der Einschnürung relativ zu der oben genannten dritten Ebene (Dämpferebene) im Bereich von 1,5 mm bis 45 mm, vorzugsweise im Bereich von 5 mm bis 45 mm, besonders bevorzugt im Bereich von 10 mm bis 45 mm liegt.

Nach einer weiteren Ausgestaltung des erfindungsgemäßen Federlenkers nimmt der Abstand der Flanken ausgehend von der Einschnürung zu dem Dämpferaufnahmeabschnitt hin zunächst zu und anschließend in Richtung von in den Seitenschenkeln ausgebildeten Befestigungslöchern, die der Anbindung des Stoßdämpfers dienen, hin ab. Hierdurch wird die Steifigkeit des relativ leichtgewichtigen Federlenkers bei günstigen Herstellungskosten weiter verbessert.

Eine weitere vorteilhafte Ausgestaltung des erfindungsgemäßen Federlenkers ist dadurch gekennzeichnet, dass der jeweilige Seitenschenkel an seiner Oberkante einen nach außen vorstehenden Flansch aufweist, der entlang des Seitenschenkels unterschiedlich breit ausgebildet ist und seine größte Breite an der Einschnürung aufweist. Hierdurch wird die Steifigkeit des Federlenkers gegen eine Aufweitung oder eine Verformung der Seitenschenkel bei hoher Achslast weiter optimiert. Vorzugsweise erstreckt sich der Flansch des jeweiligen Seitenschenkels von dem ersten Endabschnitt durchgängig bis zu dem zweiten Endabschnitt des Federlenkers. Eine noch höhere Steifigkeit des Federlenkers lässt sich erzielen, wenn nach einer weiteren Ausgestaltung des Federlenkers der Flansch einen relativ zu seiner Oberseite nach unten hin abgekanteten Außenrand aufweist, der sich zumindest entlang des Federaufnahmeabschnitt und des Dämpferaufnahmeabschnitt erstreckt.

In einer weiteren vorteilhaften Ausgestaltung des Federlenkers definieren die Seitenschenkel einen gabelförmigen Lagerabschnitt zur Anbindung eines Radträgers sowie zur Anbindung des Stoßdämpfers. Der gabelförmige Lagerabschnitt begrenzt dabei einen nischenförmigen Ausschnitt, der sich von dem zweiten Endabschnitt bis zu einer Stelle, die zwischen Befestigungslöchern, die der Anbindung des Stoßdämpfers dienen, und der Einschnürung liegt, erstreckt. Die Anbindung des Stoßdämpfers an den Seitenschenkeln des Federlenkers erhöht die Steifigkeit des Stoßdämpfers gegen eine Aufweitung der Seitenschenkel. Der nischenförmige Ausschnitt in dem gabelförmigen Lagerabschnitt verringert das Bauteilgewicht des Federlenkers.

Für die Steifigkeit des relativ leichtgewichtigen Federlenkers ist es auch vorteilhaft, wenn nach einer weiteren Ausgestaltung an dem gabelförmigen Lagerabschnitt flanschförmige, einander zugewandte Stege ausgebildet sind, welche den nischenförmigen Ausschnitt begrenzen.

In einer weiteren vorteilhaften Ausgestaltung des Federlenkers weist dessen Federabstützfläche eine Öffnung auf, an der ein einwärts vorstehender Kragen ausgebildet ist. Im montierten Zustand des Federlenkers ragt der Kragen in die auf der Federabstützfläche abgestützte Feder (Schraubenfeder). Vorzugsweise ist der obere Rand des Kragens radial nach innen geformt, so dass die obere, umlaufende Kante des Kragens radial nach innen gegenüber einem unteren ringförmigen Abschnitt des Kragens vorsteht. Der Kragen kann als Zentriervorsprung für die auf dem Federlenker abgestützte Feder dienen. Zudem verbessert der Kragen die Steifigkeit des Federlenkers.

Eine weitere Ausgestaltung des Federlenkers sieht vor, dass in den Seitenschenkeln zwischen dem Dämpferaufnahmeabschnitt und dem zweiten Endabschnitt einander zugewandte Sicken ausgebildet sind. Die Sicken sind dabei so ausgebildet, dass der Abstand der Flanken der Seitenschenkel ausgehend von dem Dämpferaufnahmeabschnitt in Richtung des zweiten Endabschnitts zunächst zunimmt und anschließend zu Befestigungslöchern, die der Anbindung eines Radträgers dienen, hin abnimmt. Durch diese Sicken wird die Steifigkeit des Federlenkers bei relativ geringem Bauteilgewicht sowie günstigen Herstellungskosten weiter verbessert.

Eine weitere vorteilhafte Ausgestaltung des Federlenkers ist dadurch gekennzeichnet, dass die Seitenschenkel an dem ersten Endabschnitt des Federlenkers einen gabelförmigen Lagerabschnitt zur Anbindung des Federlenkers an einem Fahrwerksträger definieren, wobei der gabelförmige Lagerabschnitt miteinander fluchtende Öffnungen mit Kragen zur Aufnahme einer Lagerbuchse aufweist. Die Kragen, die auch als Durchzüge bezeichnet werden können, sind vorzugsweise nach innen gerichtet, d. h. einander zugewandt.

Nach einer weiteren vorteilhaften Ausgestaltung des Federlenkers ist im Boden des Federlenkers zwischen der Federabstützfläche und dem ersten Endabschnitt, welcher der Anbindung des Federlenkers an einem Fahrwerksträger dient, eine längliche Öffnung ausgebildet, die sich im Wesentlichen parallel zur Längsmittelachse des Federlenkers erstreckt. Die Länge dieser Öffnung ist vorzugsweise deutlich größer als der Abstand der Flanken der Seitenschenkel an der Einschnürung oder am Dämpferaufnahmeabschnitt und/oder als der Durchmesser der in der Federabstützfläche ausgebildeten Öffnung. Die Längskanten der länglichen Öffnung verlaufen vorzugsweise im Wesentlichen oder abschnittsweise divergent zueinander, wobei ihr Abstand in Richtung der Federabstützfläche hin zunimmt. Durch die längliche Öffnung wird das Bauteilgewicht des Federlenkers erheblich reduziert.

Der erfindungsgemäße Federlenker ist nach einer weiteren Ausgestaltung der Erfindung aus Stahlblech mit einer Streckgrenze von mindestens 600 MPa, vorzugsweise mindestens 700 MPa, besonders bevorzugt mindestens 750 MPa hergestellt.

Nachfolgend wird die Erfindung anhand einer ein Ausführungsbeispiel darstellenden Zeichnung näher erläutert. Es zeigen:
- Fig. 1: einen erfindungsgemäßen Federlenker in einer perspektivischen Darstellung;
- Fig. 2: den Federlenker aus Fig. 1 in einer Seitenansicht;
- Fig. 3: den Federlenker aus Fig. 1 in einer Draufsicht;
- Fig. 4A: eine Querschnittansicht des Federlenkers entlang der Schnittlinie IVA-IVA in Fig. 3;
- Fig. 4B: eine Querschnittansicht des Federlenkers entlang der Schnittlinie IVB-IVB in Fig. 3;
- Fig. 4C: die Querschnittansicht der Fig. 4B überlagert mit der Querschnittansicht der Fig. 4A; und
- Fig. 5: eine vereinfachte Seitenansicht eines Abschnitts des Federlenkers aus Fig. 2, mit dem Endanschnitt zur radseitigen Anbindung des Federlenkers, dem Dämpferaufnahmeabschnitt zur Anbindung eines Stoßdämpfers und der U-förmigen Einschnürung.

In der Zeichnung ist ein Federlenker 1 für eine Radaufhängung eines Kraftfahrzeuges dargestellt. Der Federlenker 1 weist nach oben gerichtete, durch einen Boden 2 miteinander verbundene Seitenschenkel 3, 4 auf und ist als einschaliges Bauteil aus einer Metallplatine durch Ausstanzen und Umformen hergestellt. Er hat einen ersten Endabschnitt 1.1 zur Anbindung an einem Fahrwerksträger und einen zweiten Endabschnitt 1.2 zur radseitigen Anbindung. Zwischen den beiden Endabschnitten 1.1, 1.2 befindet sich ein Federaufnahmeabschnitt 1.3, der eine auf dem Boden 2 ausgebildete Federabstützfläche 2.1 zur Abstützung einer (hier nicht gezeigten) Feder (Schraubenfeder) aufweist. Des Weiteren weist der Federlenker 1 zwischen dem Federaufnahmeabschnitt 1.3 und dem zweiten Endabschnitt 1.2 einen Dämpferaufnahmeabschnitt 1.4 zur Anbindung eines Stoßdämpfers (nicht gezeigt) auf.

Der Federlenker 1 ist aus hochfestem Metallblech, vorzugsweise hochfestem Stahlblech hergestellt. Das zu seiner Herstellung verwendete Metall- oder Stahlblech hat eine Streckgrenze von mindestens 600 MPa, vorzugsweise mindestens 700 MPa, beispielsweise von mindestens 800 MPa. Die Dicke des verwendeten Metall- oder Stahlblechs liegt beispielsweise im Bereich von 2,0 mm bis 3,0 mm, vorzugsweise im Bereich von 2,0 mm bis 2,6 mm.

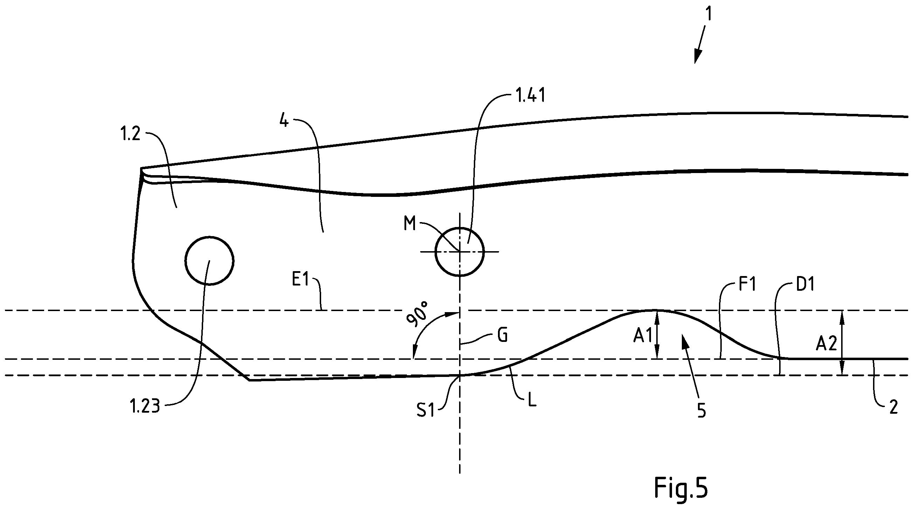

Zwischen der Federabstützfläche 2.1 und dem Dämpferaufnahmeabschnitt 1.4 ist eine U-förmige Einschnürung 5 ausgebildet, die in dem Boden 2 und in den Seitenschenkeln 3, 4 verläuft. Die Einschnürung 5 lässt sich anhand von Referenzebenen definieren. Wie in Fig. 5 skizziert, kann die Einschnürung 5 beispielsweise durch eine Hauptebene (Hauptreferenzebene) F1, eine zweite Ebene E1 und eine dritte Ebene D1 definieren werden, wobei die Hauptebene F1 tangential zu der der Federabstützfläche 2.1 gegenüberliegende Unterseite des Bodens 2 verläuft, wobei die zweite Ebene E1 oberhalb und parallel zu der Hauptebene F1 und durch den Hochpunkt der Einschnürung 5 in der Unterseite des Bodens 2 verläuft, wobei die dritte Ebene D1 parallel zu der Hauptebene F1 und durch einen Schnittpunkt S1 verläuft, wobei der Schnittpunkt S1 ein Schnittpunkt einer Geraden G mit einer unteren Außenkonturlinie L eines der Seitenschenkel 4 ist, und wobei die Gerade G senkrecht zu der Hauptebene F1 und durch einen Mittelpunkt M eines im Dämpferaufnahmeabschnitt 1.4 ausgebildeten, der Anbindung des Stoßdämpfers dienenden Befestigungsloches 1.41 verläuft. Die Einschnürung 5 ist beispielsweise verwirklicht, wenn die zweite Ebene E1 relativ zu der Hauptebene F1 und die dritte Ebene D1 relativ zu der zweiten Ebene E1 beabstandet sind. Anders ausgedrückt, ist die Einschnürung 5 gegeben, wenn der Abstand A1 der zweiten Ebene E1 zu der Hauptebene F1 und der Abstand A2 der dritten Ebene D1 zu der zweiten Ebene E1 jeweils größer Null sind, wobei der kleinere Abstand A1 der Tiefe der Einschnürung 5 im Boden 2 entspricht. Die Tiefe der Einschnürung 5 im Boden 2 des Federlenkers 1 kann beispielsweise in einem Bereich von 1,5 mm bis 40 mm, insbesondere in einem Bereich von 8 mm bis 16 mm liegen. Der Abstand A2 der Ebene D1 zu der Ebene E1 ist vorzugsweise größer als der Abstand A1 der zweiten Ebene E1 zu der Hauptebene F1.

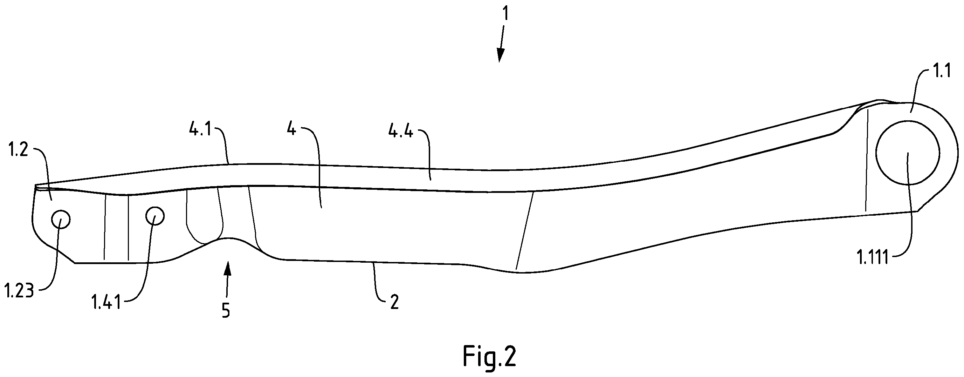

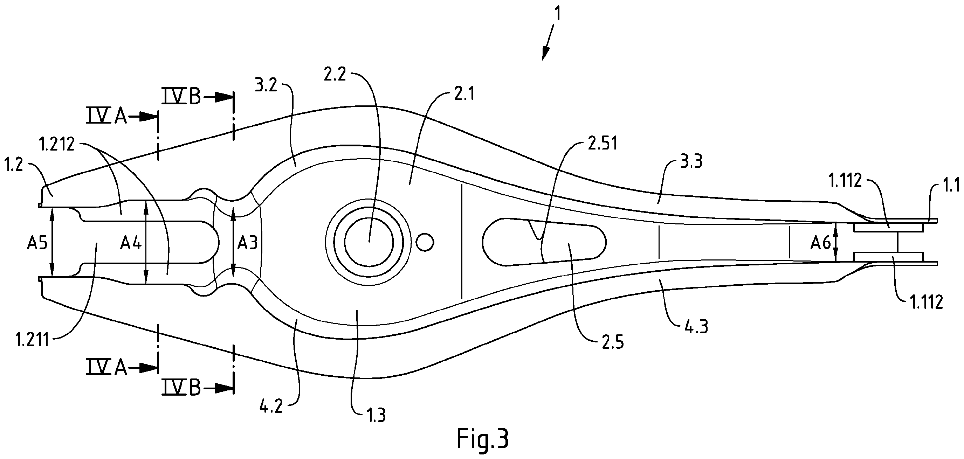

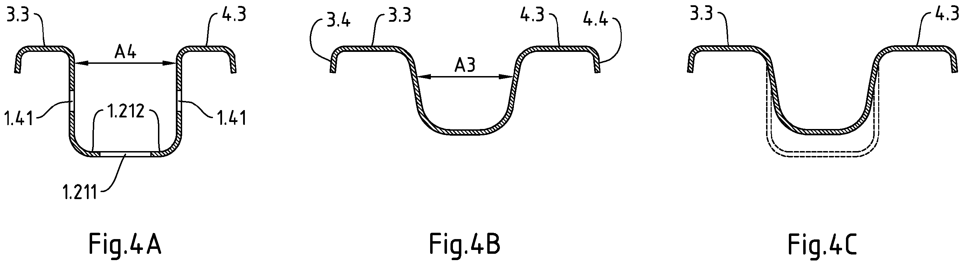

Der jeweilige Seitenschenkel 3, 4 des Federlenkers 1 definiert eine Oberkante 3.1, 4.1. In Fig. 2 ist zu erkennen, dass der Abstand der Oberkante 4.1 relativ zu dem Boden 2 an der Einschnürung 5 ein Minimum besitzt. Des Weiteren definieren die Seitenschenkel 3, 4 einander zugewandte Flanken 3.2, 4.2. An der Einschnürung nimmt der Abstand der Flanken 3.2, 4.2 von der Oberkante 3.1, 4.1 in Richtung des Bodens 2 allmählich ab. In den Figuren 3 und 4A bis 4C ist zu erkennen, dass der mittlere Abstand A3 der Flanken 3.2, 4.2 zueinander an der Einschnürung 5 kleiner ist als der Abstand A4 der Flanken 3.2, 4.2 an dem Dämpferaufnahmeabschnitt 1.4. Der Abstand A3 der Flanken 3.2, 4.2 an der Einschnürung 5 kann beispielsweise um mindestens 3 mm, vorzugsweise um mindestens 5 mm kleiner sein als der Abstand A4 der Flanken 3.2, 4.2 an dem Dämpferaufnahmeabschnitt 1.4.

Ferner ist der Federlenker 1 beispielsweise derart ausgebildet, dass der Abstand A3 der Flanken 3.2, 4.2 an der Einschnürung 5 größer ist als der Abstand A5 der Flanken 3.2, 4.2 an dem zweiten Endabschnitt 1.2. Beispielsweise kann der Abstand A3 der Flanken 3.2, 4.2 an der Einschnürung 5 um mindestens 5 mm, vorzugsweise um mindestens 8 mm größer sein als der Abstand A5 der Flanken 3.2, 4.2 an dem zweiten Endabschnitt 1.2.

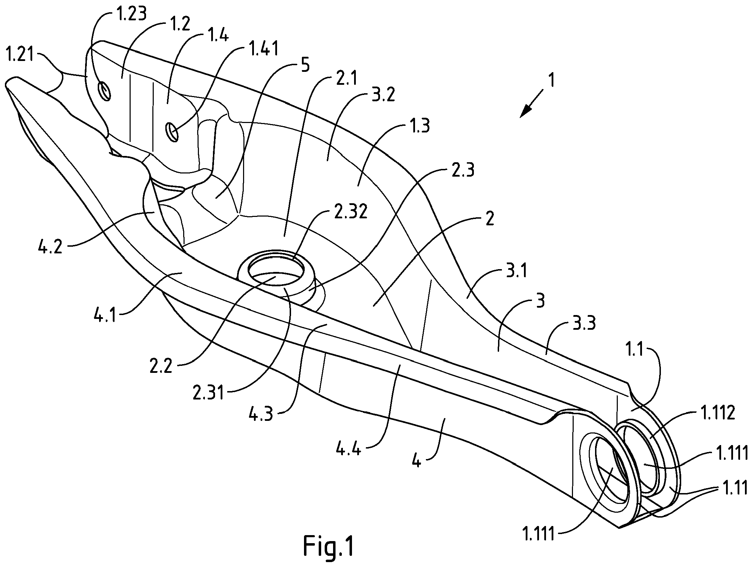

Ausgehend von der Einschnürung 5 nimmt der Abstand A3 der Flanken 3.2, 4.2 in Richtung zu dem Dämpferaufnahmeabschnitt 1.4 hin zunächst zu und von einer gewissen Stelle aus in Richtung zu den in den Seitenschenkeln 3, 4 ausgebildeten Befestigungslöchern 1.41, die der Anbindung eines Stoßdämpfers (nicht gezeigt) dienen, ab (vgl. Fig. 1 und 3).

Der jeweilige Seitenschenkel 3, 4 des Federlenkers 1 weist an seiner Oberkante 3.1, 4.1 einen nach außen vorstehenden Flansch 3.3, 4.3 auf. Vorzugsweise erstreckt sich der Flansch 3.3, 4.3 im Wesentlichen von dem ersten Endabschnitt 1.1 aus kontinuierlich bis zu dem zweiten Endabschnitt 1.2 des Federlenkers 1. Der Flansch 3.3, 4.3 ist entlang des jeweiligen Seitenschenkels 3, 4 unterschiedlich breit ausgebildet und besitzt seine größte Breite an der Einschnürung 5 (siehe Fig. 3). Zudem weist der Flansch 3.3, 4.3 einen relativ zu seiner Oberseite nach unten hin abgekanteten Außenrand 3.4, 4.4 auf. Der nach unten gebogene Außenrand 3.4, 4.4 erstreckt sich im Wesentlichen über die gesamte Länge des Flansches 3.3, 4.3.

An seinem der Anbindung eines Radträgers dienenden Endabschnitt 1.2 weist der Federlenker 1 einen durch die Seitenschenkel 3, 4 definierten gabelförmigen Lagerabschnitt 1.21 auf, der zusätzlich der Anbindung eines Stoßdämpfers dient. Der gabelförmige Lagerabschnitt 1.21 begrenzt einen nischenförmigen Ausschnitt 1.211, der sich von dem zweiten Endabschnitt 1.2 bis zu einer Stelle, die zwischen Befestigungslöchern 1.41 und der Einschnürung 5 liegt, erstreckt. An dem Lagerabschnitt 1.21 sind flanschförmige, einander zugewandte Stege 1.212 ausgebildet, die den nischenförmigen Ausschnitt 1.211 begrenzen.

Die Federabstützfläche 2.1 weist eine Öffnung 2.2 auf, an der ein einwärts vorstehender Kragen 2.3 ausgebildet ist. Der obere Rand 2.31 des Kragens 2.3 ist vorzugsweise radial nach innen geformt, so dass die obere, umlaufende Kante 2.32 des Kragens 2.3 radial nach innen gegenüber einem unteren ringförmigen Abschnitt des Kragens 2.3 vorsteht.

An dem ersten Endabschnitt 1.1 des Federlenkers 1 definieren die Seitenschenkel 3, 4 einen gabelförmigen Lagerabschnitt 1.11 zur Anbindung des Federlenkers an einem Fahrwerksträger. Der gabelförmige Lagerabschnitt 1.11 weist miteinander fluchtende Öffnungen 1.111 mit Kragen 1.112 zur Aufnahme einer Lagerbuchse auf. Die Kragen 1.112 sind vorzugsweise nach innen gerichtet. Der Abstand A6 der Seitenschenkel 3, 4 an dem gabelförmige Lagerabschnitt 1.11 ist deutlich kleiner als der Abstand A5 der Seitenschenkel 3, 4 an dem zweiten Endabschnitt 1.2 des Federlenkers 1.

Im Boden 2 des Federlenkers 1 ist zwischen dem ersten Endabschnitt 1.1 und der Federabstützfläche 2.1 eine längliche Öffnung (Durchgangsöffnung) 2.5 ausgebildet, die sich im Wesentlichen parallel zur Längsmittelachse des Federlenkers 1 erstreckt. Die Länge dieser Öffnung 2.5 ist deutlich größer als der Abstand A4 der Flanken 3.2, 4.2 der Seitenschenkel 3, 4 am Dämpferaufnahmeabschnitt 1.4. Die Längskanten 2.51 der Öffnung 2.5 verlaufen im Wesentlichen oder abschnittsweise divergent zueinander, wobei ihr Abstand in Richtung der Federabstützfläche 2.1 hin zunimmt.

Die Ausführung des erfindungsgemäßen Federlenkers 1 ist nicht auf das in der Zeichnung dargestellte Ausführungsbeispiel beschränkt. Vielmehr sind zahlreiche Varianten denkbar, die auch bei von dem gezeigten Beispiel abweichenden Ausführungen von der in den Ansprüchen angegebenen Erfindung Gebrauch machen. So können beispielsweise in den Seitenschenkeln 3, 4 zwischen dem Dämpferaufnahmeabschnitt 1.4 und dem zweiten Endabschnitt 1.2 einander zugewandte Sicken ausgebildet sein. Die Sicken sind dabei vorzugsweise so ausgebildet, dass der Abstand der Flanken 3.2, 4.2 der Seitenschenkel 3, 4 ausgehend von dem Dämpferaufnahmeabschnitt 1.4 in Richtung des zweiten Endabschnitts 1.2 zunächst zunimmt und anschließend zu den Befestigungslöchern 1.23 hin abnimmt.

## Patentansprüche

1. Aus Metallblech geformter einschaliger Federlenker (1) für eine Radaufhängung eines Kraftfahrzeuges,
- mit nach oben gerichteten, durch einen Boden (2) miteinander verbundenen Seitenschenkeln (3, 4),
- mit einem ersten Endabschnitt (1.1) zur Anbindung an einem Fahrwerksträger,
- mit einem zweiten Endabschnitt (1.2) zur radseitigen Anbindung,
- mit einem Federaufnahmeabschnitt (1.3), der sich zwischen den beiden Endabschnitten (1.1, 1.2) befindet und eine auf dem Boden (2) ausgebildete Federabstützfläche (2.1) aufweist, und
- mit einem zwischen dem Federaufnahmeabschnitt (1.3) und dem zweiten Endabschnitt (1.2) ausgebildeten Dämpferaufnahmeabschnitt (1.4) zur Anbindung eines Stößdämpfers,
**dadurch gekennzeichnet, dass** zwischen der Federabstützfläche (2.1) und dem Dämpferaufnahmeabschnitt (1.4) eine U-förmige Einschnürung (5) in Form einer U-förmigen Sicke ausgebildet ist, die in dem Boden (2) und in den Seitenschenkeln (3, 4) verläuft.

2. Federlenker nach Anspruch 1, **dadurch gekennzeichnet, dass** die Einschnürung (5) durch eine Hauptebene (F1), eine zweite Ebene (E1) und eine dritte Ebene (D1) definiert ist, wobei die Hauptebene (F1) tangential zu der der Federabstützfläche (2.1) gegenüberliegende Unterseite des Bodens (2) verläuft, wobei die zweite Ebene (E1) oberhalb und parallel zu der Hauptebene (F1) und durch den Hochpunkt der Einschnürung (5) in der Unterseite des Bodens (2) verläuft,
wobei die dritte Ebene (D1) parallel zu der Hauptebene (F1) und durch einen Schnittpunkt (S1) verläuft,
wobei der Schnittpunkt (S1) ein Schnittpunkt einer Geraden (G) mit einer unteren Außenkonturlinie (L) eines der Seitenschenkel (3, 4) ist,
wobei die Gerade (G) senkrecht zu der Hauptebene (F1) und durch einen Mittelpunkt (M) eines im Dämpferaufnahmeabschnitt (1.4) ausgebildeten, der Anbindung des Stoßdämpfers dienenden Befestigungsloches (1.41) verläuft, und wobei die zweite Ebene (E1) relativ zu der Hauptebene (F1) und die dritte Ebene (D1) relativ zu der zweiten Ebene (E1) beabstandet sind.

3. Federlenker nach Anspruch 1 oder 2, wobei der jeweilige Seitenschenkel (3, 4) eine Oberkante (3.1, 4.1) definiert, und wobei der Abstand der Oberkante (3.1, 4.1) relativ zu dem Boden (2) an der Einschnürung (5) ein Minimum hat.

4. Federlenker nach einem der Ansprüche 1 bis 3, wobei die Seitenschenkel (3, 4) einander zugewandte Flanken (3.2, 4.2) definieren, und wobei der Abstand (A3) der Flanken (3.2, 4.2) zueinander an der Einschnürung (5) kleiner ist als der Abstand (A4) der Flanken (3.2, 4.2) zueinander an dem Dämpferaufnahmeabschnitt (1.4).

5. Federlenker nach Anspruch 4, **dadurch gekennzeichnet, dass** der Abstand (A3) der Flanken (3.2, 4.2) zueinander an der Einschnürung (5) um mindestens 3 mm, vorzugsweise um mindestens 5 mm kleiner ist als der Abstand (A4) der Flanken (3.2, 4.2) zueinander an dem Dämpferaufnahmeabschnitt (1.4).

6. Federlenker nach Anspruch 4 oder 5, **dadurch gekennzeichnet, dass** der Abstand (A3) der Flanken (3.2, 4.2) zueinander an der Einschnürung (5) kleiner als oder gleich dem Abstand (A5) der Flanken (3.2, 4.2) zueinander an dem zweiten Endabschnitt (1.2) ist.

7. Federlenker nach Anspruch 4 oder 5, **dadurch gekennzeichnet, dass** der Abstand (A3) der Flanken (3.2,4.2) zueinander an der Einschnürung (5) um mindestens 3 mm, vorzugsweise um mindestens 5 mm kleiner ist als der Abstand (A5) der Flanken (3.2, 4.2) zueinander an dem zweiten Endabschnitt (1.2).

8. Federlenker nach einem der Ansprüche 1 bis 7 in Kombination mit Anspruch 2, **dadurch gekennzeichnet, dass** eine Tiefe der Einschnürung (5) relativ zu der Hauptebene (F1) im Bereich von 1,5 mm bis 40 mm, vorzugsweise im Bereich von 5 mm bis 40 mm, besonders bevorzugt im Bereich von 10 mm bis 40 mm liegt.

9. Federlenker nach einem der Ansprüche 1 bis 8, **dadurch gekennzeichnet, dass** der Abstand (A3) der Flanken (3.2, 4.2) ausgehend von der Einschnürung (5) zu dem Dämpferaufnahmeabschnitt (1.4) hin zunächst zunimmt und anschließend in Richtung von in den Seitenschenkeln (3, 4) ausgebildeten Befestigungslöchern (1.41), die der Anbindung des Stoßdämpfers dienen, hin abnimmt.

10. Federlenker nach einem der Ansprüche 1 bis 9, **dadurch gekennzeichnet, dass** der jeweilige Seitenschenkel (3, 4) an seiner Oberkante (3.1, 4.1) einen nach außen vorstehenden Flansch (3.3, 4.3) aufweist, der entlang des Seitenschenkels (3, 4) unterschiedlich breit ausgebildet ist und seine größte Breite an der Einschnürung (5) aufweist.

11. Federlenker nach Anspruch 10, **dadurch gekennzeichnet, dass** der Flansch (3.3, 4.3) einen relativ zu seiner Oberseite nach unten hin abgekanteten Außenrand (3.4, 4.4) aufweist, der sich zumindest entlang des Federaufnahmeabschnitt (1.3) und des Dämpferaufnahmeabschnitt (1.4) erstreckt.

12. Federlenker nach einem der Ansprüche 1 bis 11, **dadurch gekennzeichnet, dass** die Seitenschenkel (3, 4) einen gabelförmigen Lagerabschnitt (1.21) zur Anbindung eines Radträgers sowie zur Anbindung des Stoßdämpfers definieren, wobei der gabelförmige Lagerabschnitt (1.21) einen nischenförmigen Ausschnitt (1.211) begrenzt, der sich von dem zweiten Endabschnitt (1.2) bis zu einer Stelle, die zwischen Befestigungslöchern (1.41), die der Anbindung des Stoßdämpfers dienen, und der Einschnürung (5) liegt, erstreckt.

13. Federlenker nach Anspruch 12, **dadurch gekennzeichnet, dass** an dem gabelförmigen Lagerabschnitt (1.21) flanschförmige, einander zugewandte Stege (1.212) ausgebildet sind, welche den nischenförmigen Ausschnitt (1.211) begrenzen.

14. Federlenker nach einem der Ansprüche 1 bis 13, **dadurch gekennzeichnet, dass** in den Seitenschenkeln (3,4) zwischen dem Dämpferaufnahmeabschnitt (1.4) und dem zweiten Endabschnitt (1.2) einander zugewandte Sicken ausgebildet sind.

15. Federlenker nach einem der Ansprüche 1 bis 14 in Kombination mit Anspruch 2, **dadurch gekennzeichnet, dass** eine Tiefe der Einschnürung (5) relativ zu der dritten Ebene (D1) im Bereich von 1,5 mm bis 45 mm, vorzugsweise im Bereich von 5 mm bis 45 mm, besonders bevorzugt im Bereich von 10 mm bis 45 mm liegt.

## Claims

1. A single-shell spring control arm (1) formed of sheet metal for a wheel suspension of a motor vehicle
- with upwardly directed side limbs (3, 4) connected to one another by a base (2),
- with a first end section (1.1) for connection to a chassis girder,
- with a second end section (1.2) for wheel-side connection,
- with a spring receiving section (1.3), which is located between the two end sections (1.1, 1.2) and has a spring support surface (2.1) formed on the base (2), and
- with a damper receiving section (1.4) formed between the spring receiving section (1.3) and the second end section (1.2) for connecting a shock absorber, **characterized in that** a U-shaped constriction (5) in the form of a U-shaped bead is formed between the spring support surface (2.1) and the damper receiving portion (1.4), which constriction extends in the base (2) and in the side limbs (3, 4).

2. The spring control arm according to claim 1, **characterized in that** the constriction (5) is defined by a main plane (F1), a second plane (E1) and a third plane (D1), the main plane (F1) being tangential to the underside of the base (2) opposite the spring support surface (2.1),
wherein the second plane (E1) extends above and parallel to the main plane (F1) and through the high point of the constriction (5) in the underside of the base (2), the third plane (D1) being parallel to the main plane (F1) and passing through a point of intersection (S1),
wherein the point of intersection (S1) is a point of intersection of a straight line (G) with a lower outer contour line (L) of one of the side limbs (3, 4),
wherein the straight line (G) extends perpendicular to the main plane (F1) and through a center (M) of a fixing hole (1.41) formed in the damper receiving portion (1.4) and serving to connect the shock absorber, and
wherein the second plane (E1) is spaced relative to the main plane (F1) and the third plane (D1) is spaced relative to the second plane (E1).

3. The spring control arm according to claim 1 or 2, wherein the respective side limb (3, 4) defines an upper edge (3.1, 4.1), and wherein the distance of the upper edge (3.1, 4.1) relative to the base (2) at the constriction (5) has a minimum.

4. The spring control arm according to any one of claims 1 to 3, wherein the side limbs (3, 4) define flanks (3.2, 4.2) facing each other, and wherein the distance (A3) of the flanks (3.2, 4.2) from each other at the constriction (5) is smaller than the distance (A4) of the flanks (3.2, 4.2) from each other at the damper receiving portion (1.4).

5. The spring control arm according to claim 4, **characterized in that** the distance between the flanks (3.2, 4.2) at the constriction (5) is at least 3 mm, preferably at least 5 mm smaller than the distance between the flanks (3.2, 4.2) at the damper receiving portion (1.4).

6. The spring control arm according to claim 4 or 5, **characterized in that** the distance (A3) between the flanks (3.2, 4.2) at the constriction (5) is smaller than or equal to the distance (A5) between the flanks (3.2, 4.2) at the second end section (1.2).

7. The spring control arm according to claim 4 or 5, **characterized in that** the distance (A3) between the flanks (3.2, 4.2) at the constriction (5) is at least 3 mm, preferably at least 5 mm smaller than the distance (A5) between the flanks (3.2, 4.2) at the second end section (1.2).

8. The spring control arm according to any one of claims 1 to 7, **characterized in that** a depth of the constriction (5) relative to the main plane (F1) is in the range of 1.5 mm to 40 mm, preferably in the range from 5 mm to 40 mm, particularly preferably in the range from 10 mm to 40 mm.

9. The spring control arm according to any one of claims 1 to 8, **characterized in that** the distance (A3) of the flanks (3.2, 4.2), starting from the constriction (5), first increases towards the shock absorber receiving section (1.4) and then decreases in the direction of fixing holes (1.41) formed in the side limbs (3, 4), which serve to connect the shock absorber.

10. The spring control arm according to any one of claims 1 to 9, **characterized in that** the respective side limb (3, 4) has an outwardly projecting flange (3.3, 4.3) at its upper edge (3.1, 4.1), which flange is formed with different widths along the side limb (3, 4) and has its greatest width at the constriction (5).

11. The spring control arm according to claim 10, **characterized in that** the flange (3.3, 4.3) has an outer edge (3.4, 4.4) which is bent downwards relative to its upper side and extends at least along the spring receiving section (1.3) and the damper receiving section (1.4).

12. The spring control arm according to any one of claims 1 to 11, **characterized in that** the side limbs (3, 4) define a fork-shaped bearing section (1.21) for connecting a wheel carrier and for connecting the shock absorber, the fork-shaped bearing section (1.21) delimiting a niche-shaped cutout (1.211) which extends from the second end section (1.2) to a point located between fixing holes (1.41), which serve to connect the shock absorber, and the constriction (5).

13. The spring control arm according to claim 12, **characterized in that** flange-shaped webs (1.212) facing one another are formed on the fork-shaped bearing section (1.21), which webs limit the niche-shaped cutout (1.211).

14. The spring control arm according to any one of claims 1 to 13, **characterized in that** beads facing one another are formed in the side limbs (3, 4) between the damper receiving section (1.4) and the second end section (1.2).

15. The spring control arm according to any one of claims 1 to 14 in combination with claim 2, **characterized in that** a depth of the constriction (5) relative to the third plane (D1) is in the range from 1.5 mm to 45 mm, preferably in the range from 5 mm to 45 mm, particularly preferably in the range from 10 mm to 45 mm.

## Revendications

1. Bras de suspension monocoque à ressort (1) constitué d'une tôle métallique pour une suspension d'un véhicule automobile,
- avec des branches latérales (3, 4) dirigées vers le haut et reliées entre elles par une base (2),
- avec une première partie d'extrémité (1.1) destinée à être rattachée à un support de châssis,
- avec une deuxième partie d'extrémité (1.2) destinée à être rattachée côté roue,
- avec une section de logement de ressort (1.3) située entre les deux parties d'extrémité (1.1, 1.2) et qui présente une surface d'appui du ressort (2.1) conçue sur la base (2), et
- avec une section de logement d'amortisseur (1.4), conçue entre la section de logement de ressort (1.3) et la deuxième partie d'extrémité (1.2), destinée au rattachement d'un amortisseur de chocs,
**caractérisé en ce qu'**un étranglement en forme de U (5), sous forme de moulure en forme de U, est conçu entre la surface d'appui du ressort (2.1) et la section de logement d'amortisseur (1.4), et cet étranglement en forme de U (5) s'étend dans la base (2) et dans les branches latérales (3, 4).

2. Bras de suspension à ressort selon la revendication 1, **caractérisé en ce que** l'étranglement (5) est défini par un plan principal (F1), un deuxième plan (E1) et un troisième plan (D1), le plan principal (F1) s'étendant tangentiellement par rapport au côté inférieur de la base (2) opposé à la surface d'appui du ressort (2.1), le deuxième plan (E1) s'étendant au-dessus et parallèlement au plan principal (F1) et à travers le point haut de l'étranglement (5) dans le côté inférieur de la base (2),
le troisième plan (D1) s'étendant parallèlement par rapport au plan principal (F1) et à travers un point d'intersection (S1),
le point d'intersection (S1) étant un point d'intersection d'une ligne droite (G) avec une ligne de contour extérieure inférieure (L) de l'une des jambes latérales (3, 4),
la ligne droite (G) s'étendant perpendiculairement par rapport au plan principal (F1) et à travers un point central (M) d'un trou de fixation (1.41), conçu dans la section de logement d'amortisseur (1.4), servant au raccordement de l'amortisseur de chocs, et
le deuxième plan (E1) étant espacé par rapport au plan principal (F1) et le troisième plan (D1) étant espacé par rapport au deuxième plan (E1).

3. Bras de suspension à ressort selon la revendication 1 ou 2, la branche latérale respective (3, 4) définissant un bord supérieur (3.1, 4.1), et la distance du bord supérieur (3.1, 4.1) par rapport à la base (2) ayant atteint un minimum au niveau de l'étranglement (5).

4. Bras de suspension à ressort selon l'une des revendications 1 à 3, les branches latérales (3, 4) définissant des flancs (3.2, 4.2) se faisant face, et la distance (A3) des flancs (3.2, 4.2) entre eux au niveau de l'étranglement (5) étant inférieure à la distance (A4) des flancs (3.2, 4.2) entre eux au niveau de la section de logement d'amortisseur (1.4).

5. Bras de suspension à ressort selon la revendication 4, **caractérisé en ce que** la distance (A3) des flancs (3.2, 4.2) entre eux au niveau de l'étranglement (5) est inférieure d'au moins 3 mm, de préférence d'au moins 5 mm, par rapport à la distance (A4) des flancs (3.2, 4.2) entre eux au niveau de la section de logement d'amortisseur (1.4).

6. Bras de suspension à ressort selon la revendication 4 ou 5, **caractérisé en ce que** la distance (A3) des flancs (3.2, 4.2) entre eux au niveau de l'étranglement (5) est inférieure ou égale à la distance (A5) des flancs (3.2, 4.2) entre eux au niveau de la deuxième partie d'extrémité (1.2).

7. Bras de suspension à ressort selon la revendication 4 ou 5, **caractérisé en ce que** la distance (A3) des flancs (3.2, 4.2) entre eux au niveau de l'étranglement (5) est inférieure d'au moins 3 mm, de préférence d'au moins 5 mm, par rapport à la distance (A5) des flancs (3.2, 4.2) entre eux au niveau de la deuxième partie d'extrémité (1.2).

8. Bras de suspension à ressort selon l'une des revendications 1 à 7 en combinaison avec la revendication 2, **caractérisé en ce qu'**une profondeur de l'étranglement (5) par rapport au plan principal (F1) se situe dans la plage entre 1,5 mm et 40 mm, de préférence dans la plage entre 5 mm et 40 mm, tout particulièrement dans la plage entre 10 mm et 40 mm.

9. Bras de suspension à ressort selon l'une des revendications 1 à 8, **caractérisé en ce que** la distance (A3) des flancs (3.2, 4.2), en partant de l'étranglement (5) vers la section de logement de l'amortisseur (1.4), augmente d'abord et diminue ensuite en direction des trous de fixation (1.41) conçus dans les branches latérales (3, 4), lesdits trous de fixation (1.41) servant au raccordement de l'amortisseur de chocs.

10. Bras de suspension à ressort selon l'une des revendications 1 à 9, **caractérisé en ce que** la branche latérale respective (3, 4) présente, au niveau de son bord supérieur (3.1, 4.1), un flanc (3.3, 4.3) faisant saillie vers l'extérieur, lequel est conçu de différentes largeurs le long de la branche latérale (3, 4) et qui présente sa plus grande largeur au niveau de l'étranglement (5).

11. Bras de suspension à ressort selon la revendication 10, **caractérisé en ce que** le flanc (3.3, 4.3) présente un bord extérieur (3.4, 4.4) chanfreiné vers le bas par rapport à son côté supérieur et qui s'étend au moins le long de la section de logement de ressort (1.3) et de la section de logement de l'amortisseur (1.4).

12. Bras de suspension à ressort selon l'une des revendications 1 à 11, **caractérisé en ce que** les branches latérales (3, 4) définissent une section de palier en forme de fourche (1.21) destinée au raccordement d'un support de roue ainsi qu'au raccordement de l'amortisseur de chocs, la section de palier en forme de fourche (1.21) délimitant une échancrure en forme de niche (1.211) qui s'étend de la deuxième partie d'extrémité (1.2) jusqu'à un point qui se situe entre les trous de fixation (1.41), lesquels servent au raccordement de l'amortisseur de chocs, et l'étranglement (5).

13. Bras de suspension à ressort selon la revendication 12, **caractérisé en ce que** des traverses (1.212) se faisant face et étant en forme de flanc, lesquelles délimitent l'échancrure en forme de niche (1.211), sont conçues au niveau de la section de palier en forme de fourche (1.21).

14. Bras de suspension à ressort selon l'une des revendications 1 à 13, **caractérisé en ce que** des moulures se faisant face sont conçues dans les branches latérales (3, 4) entre la section de logement de l'amortisseur (1.4) et la deuxième partie d'extrémité (1.2).

15. Bras de suspension à ressort selon l'une des revendications 1 à 14 en combinaison avec la revendication 2, **caractérisé en ce qu'**une profondeur de l'étranglement (5) se situe, par rapport au troisième plan (D1), dans une plage entre 1,5 mm et 45 mm, de préférence dans une plage entre 5 mm et 45 mm, tout particulièrement dans une plage entre 10 mm et 45 mm.
